# EUROPEAN PATENT SPECIFICATION

(11) **EP 4 309 931 B1**
(45) Date of publication and mention of the grant of the patent: **19.02.2025**
(21) Application number: 22185538.0
(22) Date of filing: 18.07.2022
(51) Int. Cl.: B60J 7/04

(54) **COVER ASSEMBLY FOR TRUCK BED**
ABDECKUNGSANORDNUNG FÜR EINE LKW-LADEFLÄCHE
ENSEMBLE COUVERCLE DE PLATEAU

(43) Date of publication of application: 24.01.2024
(73) Proprietor: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(56) References cited:
- US-A1- 2016 236 549
- US-A1- 2016 257 256
- US-A1- 2018 118 002
- US-A1- 2020 353 803

## Description

### Field of the invention

The invention relates to a cover assembly for the truck bed of a pick-up type vehicle, and in particular to a cover assembly comprising a rollable curtain and a plurality of cable guiding elements for supporting and guiding cable wires during winding and unwinding of the curtain, to provide a wired connection between stationary and moving or rolling elements.

### Background

Truck bed covers are commonly used with pick-up trucks and like vehicles with cargo areas that are substantially exposed. There are known different types of covers (roll-up covers, folding covers, retractable covers, one-piece solid covers, etc.) for providing a more secure, weather-protected storage.

The design and use of retractable roll-up truck bed covers with open bed pickup trucks is well known. Conventional retractable roll-up truck bed covers commonly include a rollable curtain formed of a plurality of individual slats hingedly connected to form a slat array. The hinged connection of individual slats enables the slat array to form a continuous cover that, once mounted in a pair of side rails, can be either completely or partially extended or retracted and stored in a rolled-up configuration inside a housing box. An example of such a retractable roll-up truck bed cover is shown in US 2018/118002 A1.

Covers, and particularly roll-up covers, comprise moveable and rollable elements and sometimes it is desirable to provide an electric wired connection to said elements i.e., to power light fixtures, to communicate with sensors, etc.

Roll-up covers including an electric wired connection mounted by running a plurality of cable wires in the side rails comprised within the roll-up covers are known.

However, due to the moveable/rollable aspect of the curtain of the roll-up covers, wired side rails of said covers are not able to provide a continuous connection between electric elements arranged on the rollable curtain and stationary elements, with respect to the housing box of the cover or with respect to the vehicle, while the curtain is operable, i.e., in movement. Therefore, there remains a need for a cover assembly and more precisely a roll-up cover, to be able to provide a wired connection and allow power to be provided to moving parts of the cover, and more precisely to parts of the roll-up cover curtain, to be used for multiple purposes, such as for effectively illuminating portions or the entire length of the truck bed, for including light signals, either decorative or functional, sensors, electric actuators, etc.

### Summary of the invention

In accordance with the invention a cover assembly for a pickup truck bed is provided. The cover assembly comprises a rollable curtain for selectively extending to at least partially cover the pickup truck bed and at least partially retracting to form a roll to be stored inside a housing box. The rollable curtain is formed of a plurality of adjacent transverse panels or slats that are hingedly connected to one another and an end slat.

According to an aspect of the invention, a plurality of cable guiding elements are mounted to at least part of the plurality of adjacent transverse panels for supporting and guiding cable wires in a defined manner during winding and unwinding of the curtain in such a manner that as the curtain is extended over the pickup truck bed the cable wires are guided and supported, without stretching, along at least one portion of the transverse panels and as the flexible cover is retracted the cable guiding elements guide and support the cable wires to form part of the roll, in an orderly manner, such that upon winding of the curtain the cable wires are wound in a circular manner without bending.

Hence, the cable guiding elements are designed to avoid stretching or bending of the cable when the cable is wound (rolled) in the housing box and/or when the cover is extended.

The cable guiding elements are configured to receive cable wires therethrough, from a stationary part of the cover assembly (i.e., parts mounted on the housing box) to different movable or rollable parts of the movable or rollable curtain (i.e., parts mounted on the rollable curtain, transverse panels, end slat) while protecting the cable wires from external damage, minimizing abrasion of the cables and avoiding bending of the cables when the curtain is wound.

According to another aspect of the invention, the cover assembly comprises a light source arranged on one or more of the plurality of adjacent transverse panels, for effectively illuminating the truck bed of a pick-up type vehicle.

According to a further aspect of the invention, the cover assembly may also comprise, arranged on the plurality of adjacent transverse panels and/or the end slat, light signals or sensor-means (pressure sensor-means, light sensor-means, extra brake lamp, emergency lamp, obstacle sensors, interior lamps etc.) that may be powered by means of the cable wires.

Additional objects and advantages of the invention will become apparent to those skilled in the art upon reference to the detailed description taken in conjunction with the provided figures.

### Brief description of the drawings

Non-limiting examples of the present disclosure will be described in the following, with reference to the appended drawings, in which
Fig. 1a shows a fully extended cover assembly according to an embodiment of the invention.
Fig. 1b is a detailed view of part of the cover assembly of Fig. 1a, showing the cable guiding elements according to one embodiment of the invention.
Fig. 2 is a front perspective view of a cable guiding element according to an embodiment of the present invention.
Fig. 3 is a back perspective view of the cable guiding element of Fig. 2.
Fig. 4 is a partial top perspective view of the cover assembly according to one embodiment of the present invention.
Fig. 5 is a partial top perspective view of the cover assembly according to another embodiment of the present invention.
Fig. 6 is a partial exploded top view of the cover assembly according to an embodiment of the present invention.
Fig. 7 is a partial bottom perspective view of the cover assembly according to an embodiment of the present invention.
Fig. 8 is a partial exploded bottom perspective view of the cover assembly according to an embodiment of the present invention.
Fig. 9 is a partial exploded view of part of the cover assembly according to an embodiment of the present application.
Fig. 10 is a partial exploded view of part of the cover assembly according to an embodiment of the present application.
Fig. 11 is a partial side perspective view of the cover assembly in a wound position, including a cable wire.
Fig. 12 is a partial side view of the cover assembly in a wound position, including a cable wire.
Fig. 13 is a partial top view cover assembly of the cover system according to one embodiment of the present invention wherein the end slat comprises a light signal and sensor-means.
Fig. 14 shows a wiring diagram of the cover assembly according to an embodiment of the invention.
Fig. 15 is a cross sectional front view of a housing box in accordance with an embodiment of the present invention, wherein the rollable curtain is in a fully retracted position.

### Detailed description of the invention

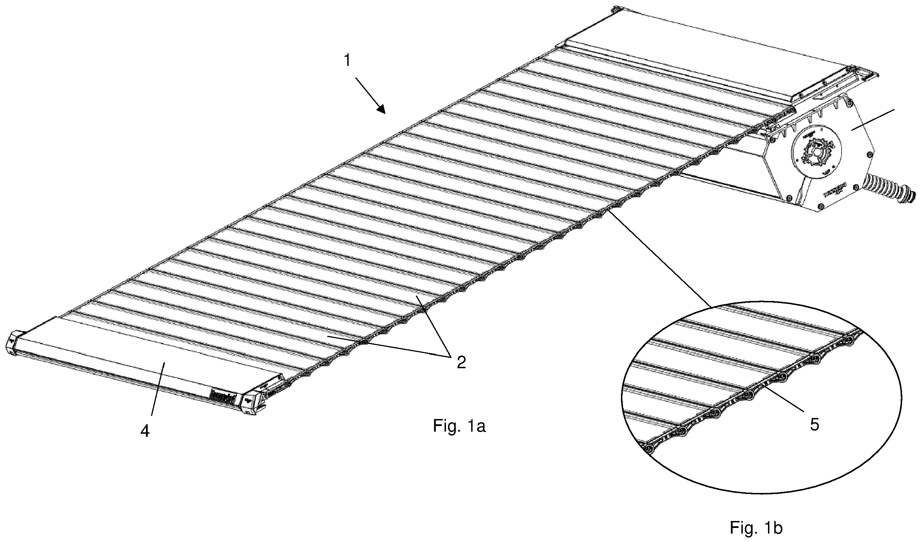

With reference to Fig. 1a, a cover assembly for the truck bed of a pick-up type vehicle according to the invention comprises a rollable curtain 1 formed of a plurality of adjacent transverse panels 2, which are continuously connected along their transverse length by hinge joints 3, and an end slat 4, said rollable curtain 1 coupled at one end to a transverse rotatable shaft, comprised within a housing box 21, to allow winding and unwinding thereon.

The cover assembly further comprises a plurality of cable guiding elements 5, as shown in Fig. 1b, mounted to at least part of the plurality of the adjacent transverse panels 2 and configured to receive cable wires therethrough for providing a wired connection to the rollable curtain 1, such that the cable wires can be supported and guided in a defined manner along at least one longitudinal length of the rollable curtain 1 during winding and unwinding of the later, providing a wired connection between elements (17, 18, 19) arranged on individual transverse panels 2 and/or the end slat 4 and stationary elements, i.e. elements mounted on the housing box 21 of the cover assembly.

The term longitudinal is to be understood as a direction parallel to a travel direction of the vehicle.

The term transverse is to be understood as a direction transverse to a travel direction of the vehicle.

The term cable wire is to be understood as any type of cable designed for applications ranging from transmission of data to power supply, such as USB cables, single wire cables, multi-wire cables, coaxial cables, transmission cables, optical-fiber cables, etc.

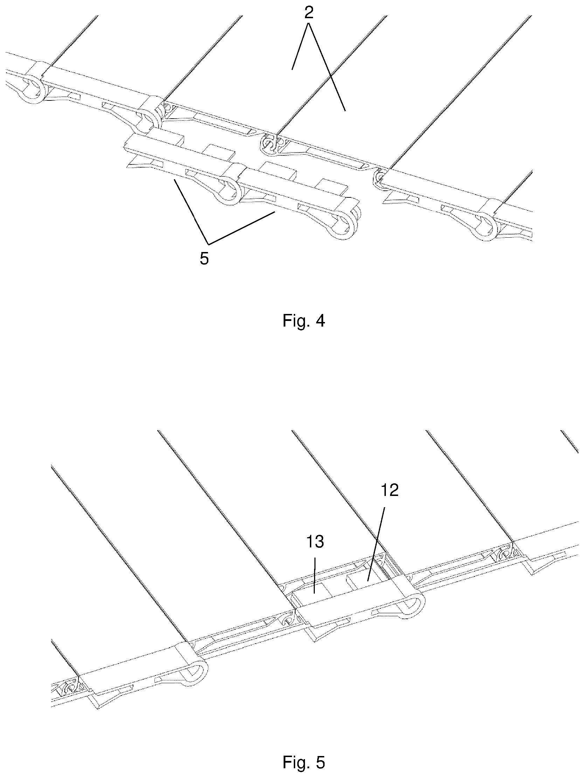

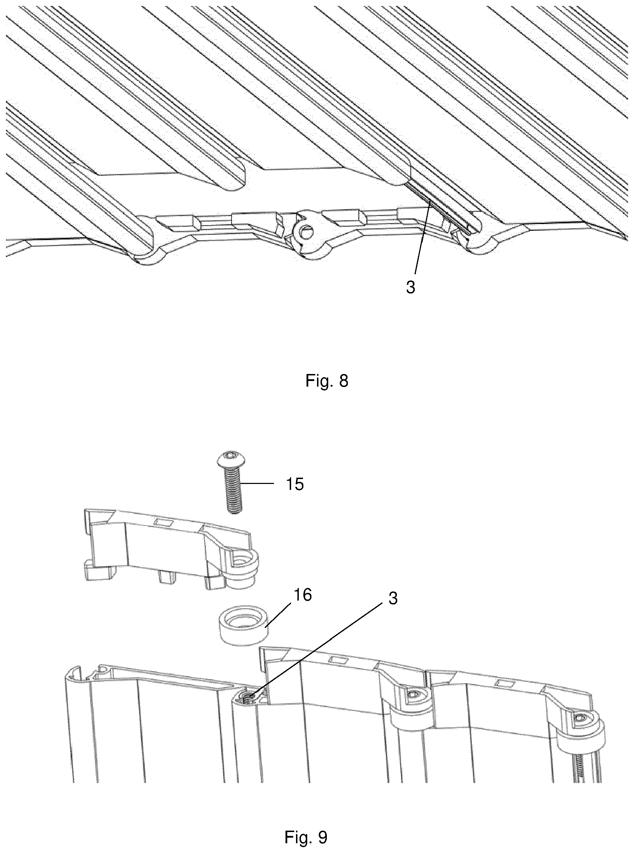

In a preferred embodiment of the present invention, as shown in Figs. 4 and 6 to 12 in addition to Figs. 1a and 1b, each one of the plurality of adjacent transverse panels 2 has a cable guiding element 5 mounted to one or both of its longitudinal ends. In this manner cable wires can either be arranged along only one longitudinal side of the rollable curtain 1 or along both opposed longitudinal sides of the rollable curtain 1, allowing for different cable routing arrangements.

Alternatively, the cable guiding elements 5 may be mounted to only part of the plurality of adjacent transverse panels 2, to one or both of its longitudinal ends, as shown in Fig. 5.

In one embodiment of the present invention, adjacent transverse panels 2, may have a cable guiding element 5 mounted to opposed longitudinal ends, respectively.

In other embodiments, the cable guiding elements 5 may be mounted or attached at an interior position of the adjacent transverse panels 2 or may be integrated in the design of the transverse panels 2.

A number of suitable configurations for the guiding elements 5 are contemplated.

Contemplated configurations are particularly suitable for receiving cable wires therethrough, allowing cable wires to be wound in the housing box 21, along with the rollable curtain 1, in a circular manner without stretching and avoiding bending of the wires when the rollable curtain 1 is extended.

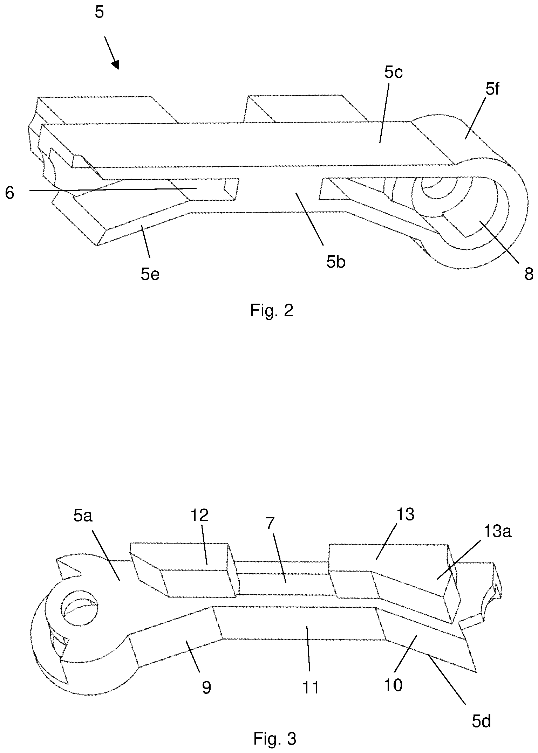

In the illustrated configurations, the cable guiding elements 5 comprise an inner wall 5a, an outer wall 5b, a top wall 5c, a bottom wall 5d, a distal end 5e and a proximal end 5f defining a through channel 6 over the entire length of the cable guiding elements 5 for cable wires to be supported and guided as they pass longitudinally through the cable guiding elements 5, as shown in Figs 2 and 3.

The cable guiding elements 5 are arranged on the rollable curtain 1 in assembled relation such that the proximal end 5f of a cable guiding element 5 faces the distal end 5e of a consecutive cable guiding element 5, whether the consecutive guiding element 5 is mounted to an adjacent panel 2 or mounted to a further removed transverse panel 2, as shown in Figs. 4 to 11.

The distal ends 5e of the cable guiding elements 5 have a design functionally corresponding to the design of the proximal ends 5f, such that when in assembled relation, during winding and unwinding of the rollable curtain1, the distal end 5e of a cable guiding element 5 functionally corresponds to the proximal end 5f of a consecutive cable guiding elements 5 to avoid bending of cable wires when the cover is extended and allow winding of the cable wires without stretching.

In one of many equally preferable configurations, the, the distal end 5e and/or the proximal end 5f of the cable guiding elements 5 is open-ended.

In the preferred embodiment of Figs. 2 and 3, the distal end 5e is open-ended and the proximal end 5f comprises a generally curved portion with an opening 8.

In another equally preferable configuration, the outer wall 5b extends partially along the longitudinal length of the guiding element 5, preventing cable wires from slipping out the through channel 6.

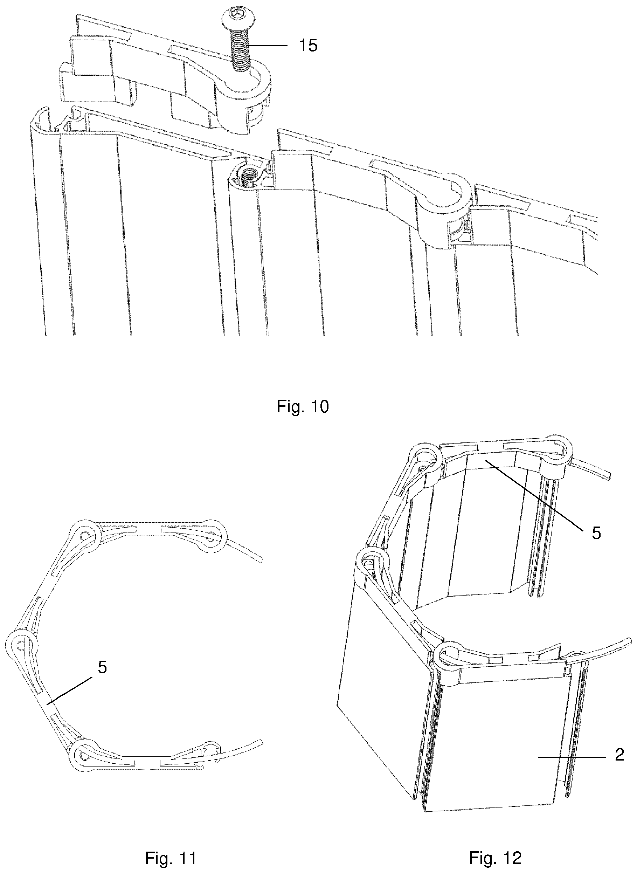

The cable guiding elements 5 have a heigh at its proximal and distal ends 5f, 5e greater than the height at the center of the guiding elements 5, such that the through channel 6 increases in height towards its ends allowing cable wires to be wound in a circular manner without bending, as shown in Figs. 11 and 12.

In the illustrated embodiments of Figs. 2 and 3, the bottom wall 5d comprises two diagonal segments 9, 10 connected to the respective ends of horizontal segment 11, however, other possible configurations of the bottom wall 5d are also contemplated, the bottom wall 5d may have a curve-shaped configuration, for example.

The cover assembly comprises means 15, for attaching the cable guiding elements 5 to the adjacent transverse panels 2. The means for attaching the cable guiding elements 5 to the adjacent transverse panels 2 may be a threaded bolt or fastener 15, as shown in Fig. 10, or any other suitable attaching means or combination thereof.

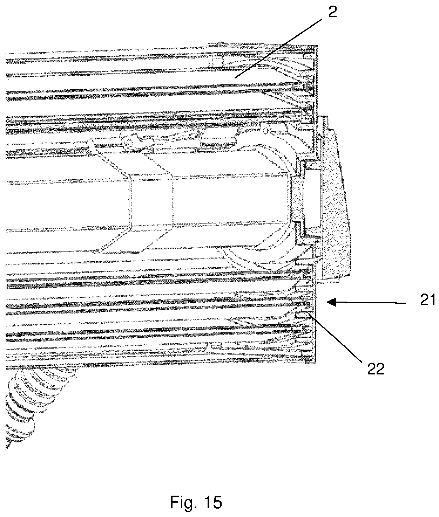

In another embodiment, the housing box 21 may comprise helical trackways 22 arranged on an inner surface of the side walls thereof, as shown in Fig. 15, to help guide the rollable curtain 1 free of excessive frictional resistance upon extending or retracting the same. In such an embodiment, the cable guiding elements 5 may comprise a ball bearing 16 to minimize the rolling friction between the transverse panels 2 and the helical trackways 22.

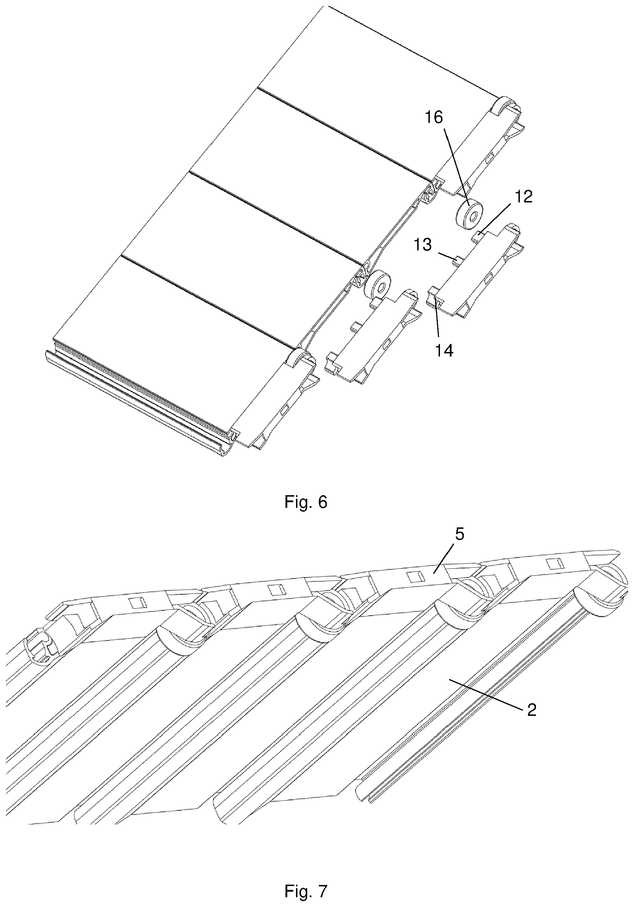

The cable guiding elements 5 may also comprise a plurality of transversely projecting parts 12, 13, 14, as shown in Figs.3 and 6, which extend inside the transverse panels 2 for providing additional attaching means. That is, the cable guiding elements 5 may have a design profile corresponding to the design profile of the transverse panels 2 for better fit.

Transversely projecting parts 12, 13, 14 may vary in configuration, number, arrangement, etc.

With specific reference to Figs. 2 and 3, the inner wall 5a of the cable guiding elements 5 may comprise a passageway 7 through which cable wires can be passed out of the through channel 6 laterally with respect to the cable guiding element 5 to provide a wired connection to elements mounted on to the transverse panel 2 to which the cable guiding element 5 is mounted to.

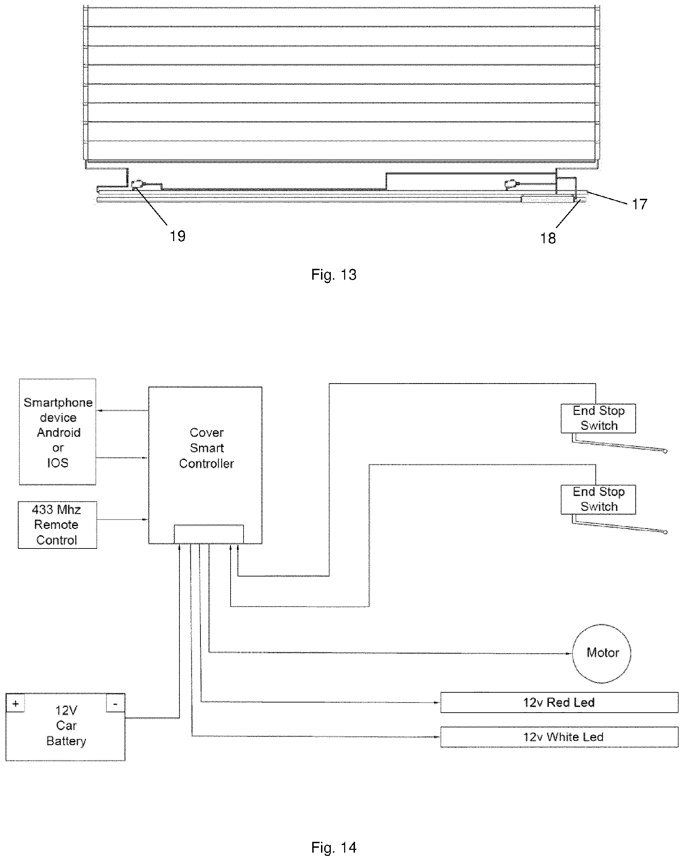

In an embodiment of the present invention, light sources 17, 18, shown in Fig. 13, may be arranged on one or more of the plurality of adjacent transverse panels 2 and oriented to direct light into the interior and/or exterior of a truck bed and may be configured for operation by dedicated switches, may be automatically operated upon deployment of the rollable curtain 1, may be remotely controlled or may also operate in conjunction with the headlights, parking lights or tail lights of the vehicle.

Alternatively, light sources 17, 18 can further be activated by a light sensor-means, not shown, upon the happening of a selected event, such as at darkness, dusk, or times of severe weather conditions, for example.

Light sources 17, 18 may be a single component or may consist of a plurality of lighting elements selectively positioned along the length of one or more of the plurality of adjacent transverse panels 2 and the end slat 4.

In a further embodiment of the present invention, as shown in Fig. 13, sensor-means 19 may be arranged in the end slat 4, such that when the cover system is motor driven, the cover will automatically stop and reverse upon detecting an obstacle instance.

In a preferred embodiment of the invention, the light source is a red light 18 that can work as an extra brake light emitting a brake light signal, an emergency light or an extra driving beam light like the rest tailgate lights of the vehicle and/or a safety light during operation of the roll-up cover.

In other embodiments, the light sources 17, 18may be illuminated when the vehicle and/or the roll-up cover is in operation.

Said lights 17, 18 and sensor-means 19 may be connected to an electric source on the vehicle, such as the vehicle battery, by means of cable wires guided to specific transverse panels 2, through the passageway 7 of the corresponding cable guiding elements 5. The electrical source may be the car battery of the vehicle or other power sources and the control signals may be simple switches or a smart control board as shown in Fig. 14.

The above-described invention may incorporate additional circuitry to control the color and the brightness of the light sources 17, 18.

In addition, further circuity may be incorporated with any of the embodiments of the present invention to cause the lights 17, 18-to flash or vary in intensity, for example, as the rollable curtain 1 is in movement (opening or closing), when the vehicle brakes or accelerates, etc.

The end slat 4 may further comprise a lock mechanism, not shown, arranged on the end slat 4, for securing the rollable curtain 1 to the tailgate of the truck. Said locking mechanism comprising a handle for opening and closing the rollable curtain 1.

The cover system is configured to be remotely controlled, as shown in Fig. 14, by means of a remote-control element or a mobile application installed in a smartphone, or locally controlled by an end slat actuator.

In addition, a smart controller controls lights 17, 18 and any other electric elements arranged on the cover assembly, such as the electric motor, may receive signals from the sensors 19, adjust the brightness of the lights and control the lock mechanism.

While the embodiments have been described in detail in the description, the same is to be considered illustrative and not restrictive in character, being understood that it would be obvious to those skilled in the art that various other changes and modifications may be made without departing from the scope of the disclosure as defined by the claims.

## Claims

1. A cover assembly for the truck bed of a pick-up type vehicle, said assembly comprising a housing box (21) and a rollable curtain (1) formed by a plurality of adjacent transverse panels (2), which are continuously connected along their transverse length by hinge joints (3), and an end slat (4),
**characterised in that** the assembly further comprises
said curtain (1) coupled at one end to a rotatable transverse shaft to allow winding and unwinding thereon, and
a plurality of cable guiding elements (5) mounted to at least part of the plurality of adjacent transverse panels (2) and/or the end slat (4) and configured to receive cable wires therethrough for providing a wired connection between electrical elements (17, 18, 19) arranged on the rollable curtain (1) and stationary elements of the housing box (21) such that the cable wires can be supported and guided in a defined manner along at least one longitudinal length of the rollable curtain (1) during winding and unwinding of the latter.

2. The cover assembly according to claim 1, wherein each one of the plurality of adjacent transverse panels (2) has a guiding element (5) mounted to one of its longitudinal ends.

3. The cover assembly according to claim 1, wherein each one of the plurality of adjacent transverse panels (2) has a guiding element (5) mounted to both of its longitudinal ends.

4. The cover assembly according to claims 1 to 3, wherein the cable guiding elements (5) comprise an inner wall (5a), an outer wall (5b), a top wall (5c), a bottom wall (5d), a distal end (5e) and a proximal end (5f) defining a through channel (6) over the entire length of the cable guiding elements (5) for cable wires to be supported and guided as they pass longitudinally through the cable guiding elements (5).

5. The cover assembly according to claim 4, wherein the outer wall (5b) extends partially along the longitudinal length of the guiding element (5) preventing cable wires from slipping out the through channel (6).

6. The cover assembly according to claims 4 or 5, wherein the inner wall (5a) comprises a passageway (7) through which a cable wire may be passed out of the through channel (6) laterally with respect to the cable guiding element (5) to provide a wired connection to electrical elements mounted on the transverse panel (2) to which the cable guiding element (5) is mounted to.

7. The cover assembly according to claims 4 to 6, wherein the distal end (5e) and/or the proximal end (5f) is open-ended.

8. The cover assembly according to claims 4 to 7, wherein the proximal end (5f) comprises a generally curved portion with an opening (8).

9. The cover assembly according to claims 4 to 8, wherein the bottom wall (5d) comprises two diagonal segments (9, 10) connected to the respective ends of horizontal segment (11).

10. The cover assembly according to claims 4 to 9, wherein the cable guiding elements (5) are arranged on the rollable curtain (1) in assembled relation such that the proximal end (5f) of a cable guiding element (5) faces the distal end (5e) of a consecutive cable guiding element (5).

11. The cover assembly according to preceding claims, wherein the guiding elements (5) comprise a plurality of transversely projecting parts (12, 13, 14) which extend inside the transverse panels (2).

12. The cover assembly according to preceding claims, wherein the electrical elements comprise one or more of a light source (17, 18) and/ or a sensor means (19) arranged on part of the plurality of adjacent transverse panels (2) or the end slat (4) and connected by cable wires.

13. The cover assembly according to claim 12, wherein the light source (17, 18) is a plurality of lighting elements selectively positioned along the length of the transverse panels 2 and/or the end slat 4.

14. The cover assembly according to preceding claims, further comprising means (15) for attaching the guiding elements (5) to the adjacent transverse panels (2) and/or the end slat 4.

15. The cover assembly according to preceding claims, wherein the housing box (21) comprises helical trackways (22) and each cable guiding element (5) comprises a ball bearing (16) to minimize the rolling friction between the transverse panels (2) and the helical trackways (22).

## Patentansprüche

1. Abdeckungsanordnung für die Lkw-Ladefläche eines Fahrzeugs des Pick-up-Typs, wobei die Anordnung einen Gehäusekasten (21) und einen rollbaren Vorhang (1) umfasst, der durch eine Vielzahl von benachbarten Querpaneelen (2) gebildet wird, die entlang ihrer Querlänge mittels Scharniergelenken (3) und einer Endleiste (4) durchgehend verbunden sind,
**dadurch gekennzeichnet, dass** die Anordnung ferner den Vorhang (1) umfasst, der an einem Ende an eine drehbare Querwelle gekoppelt ist, um ein Aufwickeln und Abwickeln darauf zu ermöglichen, und
eine Vielzahl von Kabelführungselementen (5), die an mindestens einem Teil der Vielzahl von benachbarten Querpaneelen (2) und/oder an der Endleiste (4) montiert und dazu ausgelegt sind, zum Bereitstellen einer drahtgebundenen Verbindung zwischen elektrischen Elementen (17, 18, 19), die am rollbaren Vorhang (1) bereitgestellt sind, und stationären Elementen des Gehäusekastens (21) Kabeldrähte dadurch aufzunehmen, derart, dass die Kabeldrähte in einer definierten Weise entlang mindestens einer Längslänge des rollbaren Vorhangs (1) während des Aufwickelns und des Abwickelns von letzterem gestützt und geführt werden können.

2. Abdeckungsanordnung nach Anspruch 1, wobei jedes der Vielzahl von benachbarten Querpaneelen (2) ein Führungselement (5) aufweist, das an einem seiner Längsenden montiert ist.

3. Abdeckungsanordnung nach Anspruch 1, wobei jedes der Vielzahl von benachbarten Querpaneelen (2) ein Führungselement (5) aufweist, das an beiden seiner Längsenden montiert ist.

4. Abdeckungsanordnung nach Anspruch 1 bis 3, wobei die Kabelführungselemente (5) eine Innenwand (5a), eine Außenwand (5b), eine obere Wand (5c), eine Bodenwand (5d), ein distales Ende (5e) und ein proximales Ende (5f) umfassen, die über die gesamte Länge der Kabelführungselemente (5) für Kabeldrähte, die zu stützen und zu führen sind, wenn sie längs durch die Kabelführungselemente (5) verlaufen, einen Durchgangskanal (6) definieren.

5. Abdeckungsanordnung nach Anspruch 4, wobei sich die Außenwand (5b) teilweise entlang der Längslänge des Führungselements (5) erstreckt, wodurch verhindert wird, dass Drähte aus dem Durchgangskanal (6) rutschen.

6. Abdeckungsanordnung nach Anspruch 4 oder 5, wobei die Innenwand (5a) eine Durchführung (7) umfasst, durch die ein Kabeldraht seitlich aus dem Durchgangskanal (6) mit Bezug auf das Kabelführungselement (5) geleitet werden kann, um eine drahtgebundene Verbindung zu elektrischen Elementen bereitzustellen, die auf dem Querpaneel (2) montiert sind, an dem das Kabelführungselement (5) montiert ist.

7. Abdeckungsanordnung nach Anspruch 4 bis 6, wobei das distale Ende (5e) und/oder das proximale Ende (5f) offen ist.

8. Abdeckungsanordnung nach Anspruch 4 bis 7, wobei das proximale Ende (5f) einen im Allgemeinen gekrümmten Abschnitt mit einer Öffnung (8) umfasst.

9. Abdeckungsanordnung nach Anspruch 4 bis 8, wobei die Bodenwand (5d) zwei diagonale Segmente (9, 10) umfasst, die mit jeweiligen Enden von horizontalen Segmenten (11) verbunden sind.

10. Abdeckungsanordnung nach Anspruch 4 bis 9, wobei die Kabelführungselemente (5) in einer zusammengesetzten Beziehung am rollbaren Vorhang (1) angeordnet sind, derart, dass das proximale Ende (5f) eines Kabelführungselements (5) dem distalen Ende (5e) eines durchgehenden Kabelführungselements (5) zugewandt ist.

11. Abdeckungsanordnung nach einem der vorhergehenden Ansprüche, wobei die Führungselemente (5) eine Vielzahl von quer vorstehenden Teilen (12, 13, 14) umfassen, die sich in den Querpaneelen (2) erstrecken.

12. Abdeckungsanordnung nach einem der vorhergehenden Ansprüche, wobei die elektrischen Elemente eines oder mehreres von einer Lichtquelle (17, 18) und/oder Sensormittel (19) umfassen, die auf einem Teil der Vielzahl von benachbarten Querpaneelen (2) oder der Endleiste (4) angeordnet und durch Kabeldrähte verbunden sind.

13. Abdeckungsanordnung nach Anspruch 12, wobei die Lichtquelle (17, 18) eine Vielzahl von Beleuchtungselementen ist, die entlang der Länge der Querpaneele 2 und/oder der Endleiste 4 selektiv positioniert sind.

14. Abdeckungsanordnung nach einem der vorhergehenden Ansprüche, die ferner Mittel (15) zum Befestigen der Führungselemente (5) an den benachbarten Querpaneelen (2) und/oder an der Endleiste 4 umfasst.

15. Abdeckungsanordnung nach einem der vorhergehenden Ansprüche, wobei der Gehäusekasten (21) spiralförmige Führungsbahnen (22) umfasst und jedes Kabelführungselement (5) ein Kugellager (16) umfasst, um die Rollreibung zwischen den Querpaneelen (2) und den spiralförmigen Führungsbahnen (22) zu minimieren.

## Revendications

1. Ensemble couverture pour le plateau de camion d'un véhicule de type pick-up, ledit ensemble comprenant un boîtier de logement (21) et un rideau enroulable (1) formé d'une pluralité de panneaux transversaux adjacents (2), qui sont reliés en continu sur leur longueur transversale par des articulations (3), et une latte d'extrémité (4),
**caractérisé en ce que** l'ensemble comprend en outre ledit rideau (1) accouplé au niveau d'une extrémité à un arbre transversal rotatif pour permettre l'enroulement et le déroulement sur celui-ci, et
une pluralité d'éléments de guidage de câble (5) montés sur au moins une partie de la pluralité de panneaux transversaux adjacents (2) et/ou de la latte d'extrémité (4) et conçus pour recevoir des fils de câble à travers eux pour la fourniture d'une liaison câblée entre des éléments électriques (17, 18, 19) agencés sur le rideau roulable (1) et des éléments fixes du boîtier de logement (21) de telle sorte que les fils de câble puissent être supportés et guidés d'une manière définie le long d'au moins une longueur longitudinale du rideau roulable (1) au cours de l'enroulement et du déroulement de ce dernier.

2. Ensemble couverture selon la revendication 1, dans lequel chacun des panneaux transversaux adjacents (2) a un élément de guidage (5) monté à l'une de ses extrémités longitudinales.

3. Ensemble couverture selon la revendication 1, dans lequel chacun de la pluralité de panneaux transversaux adjacents (2) a un élément de guidage (5) monté à ses deux extrémités longitudinales.

4. Ensemble couverture selon les revendications 1 à 3, dans lequel les éléments de guidage de câble (5) comprennent une paroi interne (5a), un mur externe (5b), une paroi supérieure (5c), un mur de fond (5d), une extrémité distale (5e) et une extrémité proximale (5f) définissant un canal traversant (6) sur toute la longueur des éléments de guidage de câble (5) pour que les fils de câble soient supportés et guidés lorsqu'ils passent longitudinalement à travers les éléments de guidage de câble (5).

5. Ensemble couverture selon la revendication 4, dans lequel la paroi externe (5b) s'étend partiellement le long de la longueur longitudinale de l'élément de guidage (5), empêchant les fils de câble de glisser hors du canal traversant (6).

6. Ensemble couverture selon la revendication 4 ou 5, dans lequel la paroi interne (5a) comprend un passage (7) à travers lequel un fil de câble peut être sorti du canal traversant (6) latéralement par rapport à l'élément de guidage de câble (5) pour fournir une liaison câblée aux éléments électriques montés sur le panneau transversal (2) sur lequel l'élément de guidage de câble (5) est monté.

7. Ensemble couverture selon les revendications 4 à 6, dans lequel l'extrémité distale (5e) et/ou l'extrémité proximale (5f) est ouverte.

8. Ensemble couverture selon les revendications 4 à 7, dans lequel l'extrémité proximale (5f) comprend une portion généralement incurvée avec une ouverture (8).

9. Ensemble couverture selon les revendications 4 à 8, dans lequel la paroi de fond (5d) comprend deux segments diagonaux (9, 10) reliés aux extrémités respectives du segment horizontal (11).

10. Ensemble couverture selon les revendications 4 à 9, dans lequel les éléments de guidage de câble (5) sont agencés sur le rideau enroulable (1) en relation assemblée de telle sorte que l'extrémité proximale (5f) d'un élément de guidage de câble (5) fait face à l'extrémité distale (5e) d'un élément de guidage de câble consécutif (5).

11. Ensemble couverture selon les revendications précédentes, dans lequel les éléments de guidage (5) comprennent une pluralité de parties en saillie transversale (12, 13, 14) qui s'étendent à l'intérieur des panneaux transversaux (2).

12. Ensemble couverture selon les revendications précédentes, dans lequel les éléments électriques comprennent une ou plusieurs parmi une source de lumière (17, 18) et/ou un moyen capteur (19) agencés sur une partie de la pluralité de panneaux transversaux adjacents (2) ou de la latte d'extrémité (4) et reliés par des fils de câble.

13. Ensemble couverture selon la revendication 12, dans lequel la source de lumière (17, 18) est une pluralité d'éléments lumineux positionnés sélectivement sur la longueur des panneaux transversaux 2 et/ou de la latte d'extrémité 4.

14. Ensemble couverture selon les revendications précédentes, comprenant en outre des moyens (15) pour assujettir les éléments de guidage (5) aux panneaux transversaux adjacents (2) et/ou à la latte d'extrémité 4.

15. Ensemble couverture selon les revendications précédentes, dans lequel le boîtier de logement (21) comprend des pistes hélicoïdales (22) et chaque élément de guidage de câble (5) comprend un roulement à billes (16) pour minimiser le frottement de roulage entre les panneaux transversaux (2) et les pistes hélicoïdales (22).
